# FASCICULE DE BREVET EUROPEEN

(11) **EP 2 801 427 B1**
(45) Date de publication et mention de la délivrance du brevet: **09.03.2016**
(21) Numéro de dépôt: 14161163.2
(22) Date de dépôt: 21.03.2014
(51) Int. Cl.: B23C 9/00, B23Q 3/06

(54) **Support anti-vibrations et procédé de fraisage de pièce métallique**
Schwingungsdämpfende Unterlage und Fräsverfahren eines Metallteils
Anti-vibration mounting and method for milling a metal part

(30) Priorité: 25.03.2013 FR 1352682
(43) Date de publication de la demande: 12.11.2014
(73) Titulaire: Palumbo Industries, 74130 Vougy (FR)
(72) Inventeur: Palumbo, Raphaël, 74460 MARNAZ (FR)
(74) Mandataire: Croonenbroek, Thomas Jakob

(56) Documents cités:
- US-A- 4 438 599
- US-A1- 2007 160 706
- US-A1- 2012 207 562

## Description

La présente invention concerne le domaine du fraisage mécanique, plus particulièrement le fraisage d'une pièce métallique en vue d'obtenir un état de surface prédéterminé.

L'invention concerne un procédé de fraisage dans le cadre de l'obtention d'une pièce de dispositif d'éclairage de véhicule automobile. Le dispositif d'éclairage comporte en particulier deux modes d'éclairages : longue portée (« pleins phares ») et de croisement (« feux de route »).

Lors du fonctionnement en mode longue portée, le faisceau obtenu est dirigé droit vers l'avant du véhicule, pour une portée maximale, généralement de l'ordre de 150 mètres. En mode de fonctionnement de croisement, le faisceau obtenu est dirigé vers le bas, la portée s'en trouve alors réduite à environ 80 mètres, mais les conducteurs d'autres véhicules situés vers l'avant sont moins susceptibles d'être éblouis.

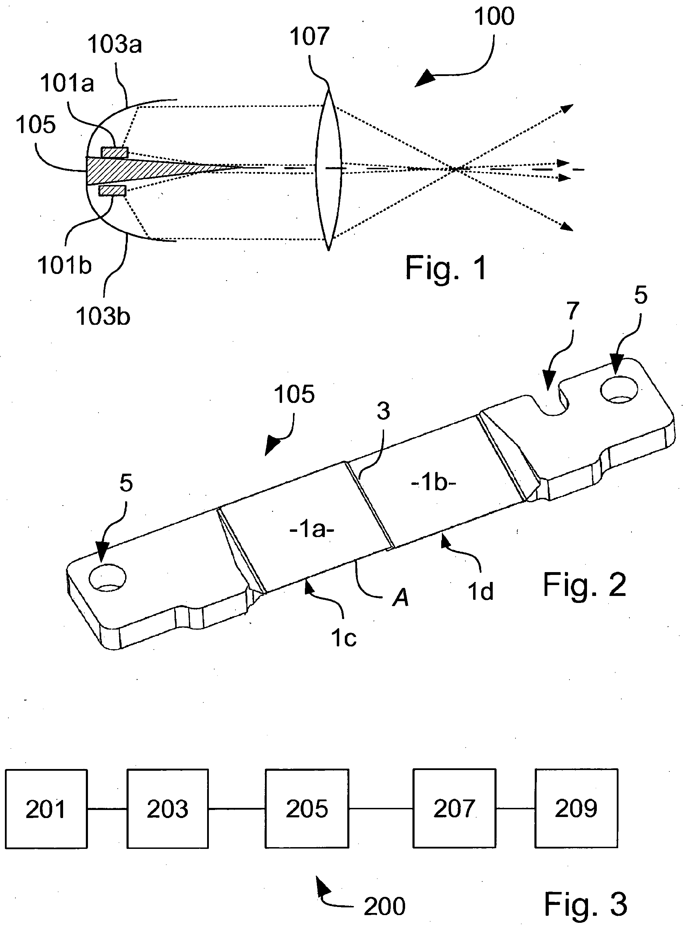

La figure 1 montre un mode de réalisation d'un tel dispositif d'éclairage 100. Le dispositif d'éclairage 100 comporte deux sources lumineuses 101a, 101b, par exemple des diodes électroluminescentes. Lesdites sources lumineuses 101a, 101b sont situées dans des miroirs convexes respectifs 103a, 103b, d'axe optique dirigé vers l'avant du véhicule, formant les faisceaux longue portée et de croisement respectivement à partir de la lumière d'une des sources lumineuses 101a, 101b.

Les miroirs convexes 103a, 103b focalisent la lumière émise par les sources lumineuses 101a, 101b, et la dirigent vers l'avant. Lesdits miroirs 103a, 103b sont ouverts sur un côté, et sont situés de part-et-d'autres d'une séparatrice 105, représentée ici en coupe. La séparatrice 105 est de section triangulaire très aplatie, avec une arête *A* située vers l'avant. À l'avant de la séparatrice 105 se trouve une lentille 107 qui met en forme les faisceaux lumineux émis.

Pour un bon fonctionnement du dispositif d'éclairage, la séparatrice 105 doit présenter les qualités suivantes :
- des surfaces hautement réfléchissantes (préférentiellement plus de 80%), afin d'améliorer le rendement énergétique du dispositif, ce qui requiert de réduire la rugosité totale en deçà du micromètre,
- une arête *A* avant très fine (épaisseur inférieure à 100 microns) et rectiligne, afin de réduire au minimum et possiblement rendre imperceptible une fine bande de séparation entre les faisceaux longue portée et de croisement (bande sombre) qui se crée sinon.

Pour obtenir une arête *A* de finesse suffisante il est avantageux de privilégier les métaux, en particulier l'aluminium comme matériau. Cependant les procédés de fraisage usuels ne permettent pas d'obtenir une surface suffisamment réfléchissante.

En outre, la présence de l'arête *A* qui doit être maintenue en l'état empêche le recours aux procédés d'agression ou d'application chimique ou électrochimiques usuels pour l'obtention des surfaces réfléchissantes, lesdits procédés détériorant l'arête *A*. En particulier, l'application d'acides pour le décapage ou le dépôt par électrolyse de métal déforment l'arête *A*.

Le document US 2012/204562 A1 divulgue un dispositif anti-vibrations pour support de pièce métallique à fraiser comprenant un tampon élastomère.

Afin de répondre au moins partiellement aux problèmes précédemment mentionné, l'invention a pour objet un dispositif anti-vibrations pour support de pièce métallique à fraiser, comprenant :
- un tampon élastomère destiné à être en contact avec la pièce métallique,
- des éléments élastiques sur lesquels est disposé le tampon élastomère.

Selon un autre aspect de la présente invention, les éléments élastiques sont destinés à être déformés lors du bridage de la pièce métallique.

Dans ledit dispositif anti-vibrations, la pièce métallique peut être calée par compression des éléments élastiques, qui absorbent les déformations, et le tampon élastomère absorbe les micro-vibrations.

Le dispositif peut en outre comprendre une ou plusieurs des caractéristiques suivante.

Le tampon élastomère est d'une dureté comprise entre 70 et 90 Shore,

Les éléments élastiques comportent une lame ressort ou des ressorts hélicoïdaux.

L'invention a aussi pour objet le support de pièce métallique à fraiser, comportant un dispositif tel que précédemment décrit.

Selon un aspect de la présente invention, le support les éléments élastiques sont montés sur un axe rotatif et formant un bras rotatif supportant le tampon élastomère et configuré pour mettre en contact ledit tampon élastomère avec la pièce métallique lorsque cette dernière est positionnée dans les moyens de bridage.

Selon un autre aspect de la présente invention, l'axe rotatif est actionné par un vérin rotatif configuré pour appliquer une force de sorte à enfoncer le tampon élastomère de 0,5mm à 3mm contre la pièce métallique durant le fraisage de la pièce métallique.

Selon un aspect supplémentaire de la présente invention, l'axe rotatif est orienté verticalement.

Les moyens de bridage de la pièce métallique peuvent alors être disposés par rapport au dispositif anti-vibrations de sorte que la pièce métallique enfonce à l'état bridé le tampon élastomère de 0,5mm à 3mm.

L'invention concerne aussi le procédé de fraisage associé d'une pièce métallique en aluminium pour l'obtention d'un état de surface de réflectivité importante, caractérisé en ce qu'il comporte les étapes :
- la pièce métallique est bridée sur un dispositif anti-vibrations comportant un tampon élastomère, et des éléments élastiques portant ledit tampon élastomère,
- un outil de fraisage est passé sur une surface de la pièce métallique, ledit outil de fraisage comportant une dent de fraisage unique, entraînée en rotation à une vitesse de rotation comprise entre 8000 et 20000 tours par minute, l'outil présentant une vitesse d'avance de 300 à 600 millimètres par minute, et ladite dent présentant :

- un angle d'hélice nul,
- un angle de coupe nul,
- un plat de planage d'une longueur comprise entre 1,3 et 1,5 millimètres, ayant une dépouille comprise entre 5° et 8°, et situé à une distance à l'axe de rotation de 4 à 8 millimètres.

Ledit procédé peut comporter en outre une étape supplémentaire de fraisage préalable, effectuée avant l'étape dans laquelle l'outil de fraisage est passé sur la surface, étape supplémentaire dans laquelle un fraisage préliminaire de la surface est effectué, de sorte à laisser une surépaisseur de 1 à 5 microns.

Lors de l'étape dans laquelle la pièce métallique est bridée sur le tampon élastomère ledit tampon élastomère est avantageusement enfoncé d'environ 0,5 à 3mm.

Lors de l'étape dans laquelle ladite pièce métallique est calée sur le tampon élastomère, la pièce métallique est avantageusement disposée de sorte que l'arête forme un surplomb de 0,05 et 0,2 millimètres.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre de façon schématique un dispositif d'éclairage utilisant une séparatrice vu en coupe longitudinale,
- la figure 2 montre une séparatrice obtenue par le procédé selon l'invention en perspective,
- la figure 3 montre un organigramme schématique d'un procédé de fraisage particulier selon l'invention,

- la figure 4 montre un support de pièce métallique tel qu'il peut être utilisé dans le procédé,
- la figure 5 montre un dispositif anti-vibrations de support de pièce métallique de la figure 4,
- la figure 6 montre un mode de réalisation d'outil de fraisage appliqué sur une séparatrice lors du procédé de fraisage,
- la figure 7 est une vue rapproché de la dent de l'outil de la figure 6,
- la figure 8 est une vue en coupe de l'outil de la figure 6 et 7 au niveau de la dent,
- la figure 9 montre partiellement une séparatrice au cours d'une étape du fraisage,
- la figure 10 montre un support de pièce métallique selon un autre mode de réalisation

Sur toutes les figures, les mêmes références se rapportent aux mêmes éléments.

En figure 2 est montré de façon schématique un mode de réalisation de séparatrice 105 telle qu'utilisée en figure 1. Les directions telles que « frontal », « latéral », « avant/arrière » sont prises par rapport à l'orientation de la séparatrice 105 en figure 1, l'avant correspondant à la direction principale du faisceau lumineux (voir figure 1).

Ladite séparatrice 105 comporte deux surfaces réfléchissantes 1a, 1b de chaque côté et inclinées dans le sens longitudinal, séparées par un chanfrein séparateur 3, de quelques dixièmes de millimètres et incliné à environ 45°. Le chanfrein séparateur 3 permet d'orienter différemment les surfaces 1a, 1b et 1c, 1d afin de mettre en forme le faisceau lumineux du dispositif d'éclairage. Le chanfrein séparateur 3 permet d'obtenir un faisceau de dispositif d'éclairage 100 avec une portion de cône relevée par rapport au reste, éclairant plus loin au niveau du bas-côté de la route.

La séparatrice 105 est réalisée en alliages d'aluminium, en particulier en alliages d'aluminium doux, par exemple les aluminiums des séries 6000 et 7000, de préférence relativement pauvres en éléments additionnels, par exemple l'alliage d'aluminium 6060.

La séparatrice 105 comporte des perçages 5, qui permettent le maintient de ladite séparatrice 105 lors de son usinage. Elle comporte aussi ici un creux détrompeur 7 sous forme d'un renfoncement sur l'un de ses côtés pour l'orientation de la pièce.

La séparatrice 105 est obtenue par fraisage d'une ébauche obtenue par exemple par découpage. Un exemple de procédé de fraisage 200 est illustré en figure 3, sous forme d'organigramme simplifié.

La première étape 201 est ici un préfraisage, effectué selon des modalités connues, de sorte à ne laisser qu'une surépaisseur comprise entre 1 et 5 micromètres (fraisage haute précision) au moins au niveau des surfaces 1a, 1b, 1c, 1d, destinées à devenir réfléchissantes.

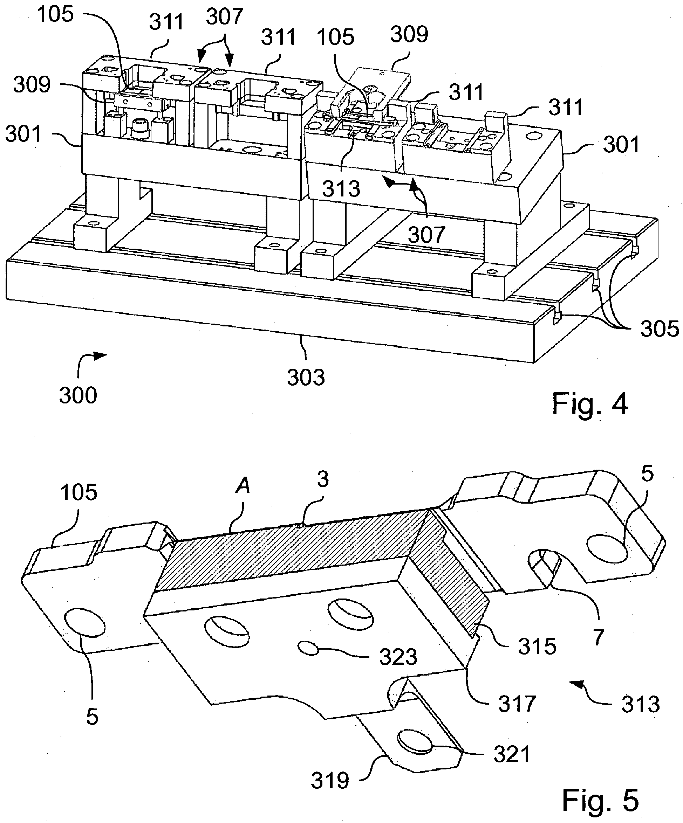

En deuxième étape 203, l'ébauche préfraisée est disposée et bridée sur un support 300 dont un mode de réalisation est représenté en figures 4 et 5. Le support 300 comporte deux tables 301, de préférence réalisées de façon à être lourde, et fixées sur un support 303, ici par insertion d'empattements (non visibles) aux pieds des tables 301 dans des rails 305 du support 303. Les tables 301 comportent au moins un, ici chacune deux (soit quatre en tout), emplacements 307 de travail.

Aux emplacements 307 sont disposées et bridées les séparatrices 105 pour leur usinage. Les emplacements 307 comportent à cette fin des doigts (non visibles) qui viennent s'insérer dans les perçages 5 et les détrompeurs 7 desdites séparatrices 105.

Les tables 301 présentent en particulier respectivement un plateau incliné selon un angle correspondant à l'angle donné à la surface 1a, 1b, 1c, 1d usinée, de sorte que les mouvements de l'outil de fraisage soient horizontaux. Les tables 301 de la figure 4 montrent chacune un mode de réalisation particulier.

Pour la table 301 située sur la gauche en figure 4, la séparatrice 105 est initialement disposée sur un mors mobile 309 (qui comporte les doigts qui s'insèrent dans les perçages 5 et détrompeurs 7), ledit mors mobile 309 venant ensuite appuyer ladite séparatrice 105 contre un mors fixe 311 pour le bridage de la séparatrice 105. Pour la table 301 située à droite en figure 5, la séparatrice 105 est initialement disposée sur le mors fixe 311, et le mors mobile 309 vient ensuite recouvrir et appuyer sur la séparatrice 105.

La séparatrice 105 est placée dans les emplacements 307 sur un dispositif anti-vibrations 313, montré plus en détails en figure 5.

En figure 5 est vu un dispositif anti-vibrations 313 sur lequel s'appuie une séparatrice 105. Le dispositif anti-vibrations 313 comporte un tampon élastomère 315, disposé sur un plateau 317 métallique, et un élément élastique 319, ici sous forme d'une lame-ressort.

La lame-ressort 319 est ici en métal, par exemple de l'acier et comporte un perçage 321 pour sa fixation à l'emplacement 307, en particulier au moyen d'une vis, et est réalisée sous forme de prolongement plus fin du plateau 317, et en particulier venant de matière avec ledit plateau 317.

Le plateau 317 comporte ici en outre un perçage 323 pour la fixation du tampon élastomère 315 au moyen d'une vis qui, avantageusement, ne traverse pas le tampon 315. De la sorte les tampons élastomère 315 peuvent être remplacés plus aisément.

Le tampon élastomère 315 a une dureté de 60 à 90 Shore, et peut notamment être réalisé en caoutchouc, potentiellement réticulé.

La séparatrice 105 est notamment disposée sur le tampon élastomère 315 de sorte que l'arête *A* fine dépasse de la surface frontale du tampon en formant un surplomb entre 0,05 et 0,2mm, préférentiellement autour de 0,1mm. En effet, une longueur plus importante entraîne un risque d'oscillations de la portion en surplomb, ce qui entraîne une augmentation de la rugosité. Une longueur inférieure entraîne un risque d'attaque du tampon élastomère 315 par l'outil 9, détériorant ledit tampon 315 tout en polluant potentiellement l'outil 9 avec des résidus d'élastomère.

La lame-ressort 319 est déformée lors de la fixation de la séparatrice 105, plus particulièrement sous l'effet de la compression par le mors mobile 309. Le tampon élastomère 315 absorbe les micro-vibrations résultant du fraisage, tandis qu'une compression excessive du tampon contre la pièce 105 à usiner marque la surface de celle-ci. Cette utilisation combinée d'éléments élastiques 319 et de tampon élastomère 315 permet de réduire les vibrations de manière suffisante pour l'obtention d'un état de surface de réflectivité importante.

D'autres modes de réalisation peuvent comprendre d'autres formes d'éléments élastiques 319 : par exemple des ressorts hélicoïdaux, ou une combinaison de ressorts hélicoïdaux et de lames-ressort.

Les lames-ressort 319 ont pour avantage de ne pas nécessiter de trou d'implémentation dans lesquels les éléments élastiques sont partiellement insérés. Par exemple dans le cas des ressorts hélicoïdaux les trous peuvent être le lieu d'une accumulation de copeaux, ce qui peut entraîner une modification du comportement des éléments élastiques 319 de manière non contrôlée, et donc nuire au rendu du fraisage.

Les éléments élastiques 319 ont typiquement une raideur entre 0,3 et 0,7 N/mm, préférentiellement autour de 0,5 N/mm. L'enfoncement lors de la mise en place de la pièce 203 lorsque le mors mobile 309 est appuyé contre le mors fixe 311 est de l'ordre de 0,5 à 3mm, préférentiellement autour de 1mm.

Lors de l'étape suivante 205, un outil de fraisage 9 est utilisé pour fraiser au moins une partie de la surface de la séparatrice 105.

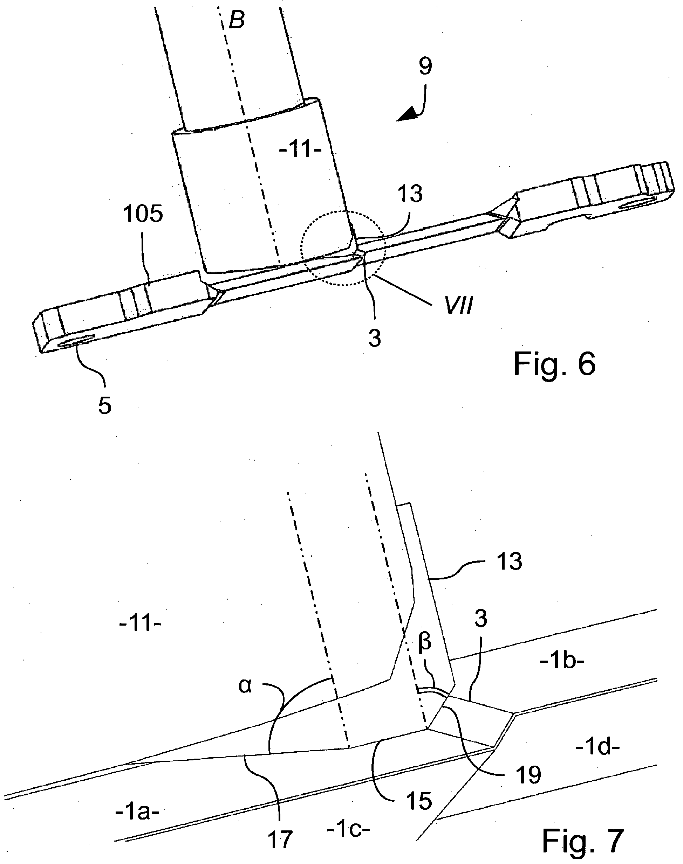

Un tel outil de fraisage 9 est représenté en figure 6, en contact d'une séparatrice 105. L'outil de fraisage 9 comporte un corps cylindrique 11, avec à une de ses extrémités une dent 13 en diamant, en particulier monocristallin et synthétique. En figure 6, l'outil 9 est appliqué contre la surface 1a à fraiser. La figure 7 est un plan rapproché de la zone dénotée *VII* de la figure 7, contenant notamment la dent 13 et le chanfrein séparateur 3 de la séparatrice 105.

La dent 13 est unique du fait que le faux rond de l'outil 9 risque de détériorer le rendu du fraisage 200 si plusieurs dents 13 sont présentes et faiblement décalées les unes par rapport aux autres.

Le diamant utilisé est avantageusement synthétique à la fois pour le prix de revient et sa grande pureté, garantissant des arêtes rectilignes à l'affûtage. Le fait que la dent 13 soit réalisée sous forme monocristalline assure l'absence de joints de grain qui sont d'un ordre de grandeur micrométrique, et peuvent donc réduire la réflectivité de façon significative.

La dent 13 comporte un angle d'hélice nul, et un angle de coupe nul.

La dent 13 comporte un aplat de planage 15, d'une longueur d'environ 1,4 millimètres plus ou moins 0,1 millimètres, et situé à une distance radiale de 4 à 8 millimètres de l'axe de rotation *B*. Le plat de planage 15 est la partie de la dent 13 principalement en contact avec la surface à fraiser. Une longueur inférieure force à diminuer la vitesse d'avance, ce qui ralentit le procédé, et une longueur supérieure entraîne une friction importante pouvant entraîner des vibrations importantes et/ou des dégradations de la surface par brûlure.

La dent 13 comporte en outre un décrochage 17, prolongeant l'arête de la dent 13 dans la direction de l'axe de rotation *B* de l'outil 9. Le décrochage 17 forme avec l'axe de rotation *B* un angle α compris entre 70° et 88°, préférentiellement autour de 80°. Cette plage de valeurs est un compromis entre l'évacuation systématique des copeaux lors du fraisage, et la probabilité de rayer la surface avec le coin que forme le décrochage 17 avec l'aplat 15. L'évacuation des copeaux augmente quand l'angle formé avec l'axe de rotation *B* est réduit et la probabilité de rayer la surface avec le coin diminue quand ledit angle est augmenté.

La dent 13 comporte aussi un chanfrein avant 19, situé du côté radialement distal de l'aplat 15. Ce chanfrein avant 19 forme avec l'axe de rotation *B* un angle β de 45°, correspondant à l'angle du chanfrein séparateur 3. Cette correspondance permet de façonner le chanfrein séparateur 3 en un seul passage lors du fraisage de la surface située en retrait 1a (particulièrement visible en figure 5) ou 1c. De manière générale un angle compris environ entre 1° et 60° est toutefois fonctionnel.

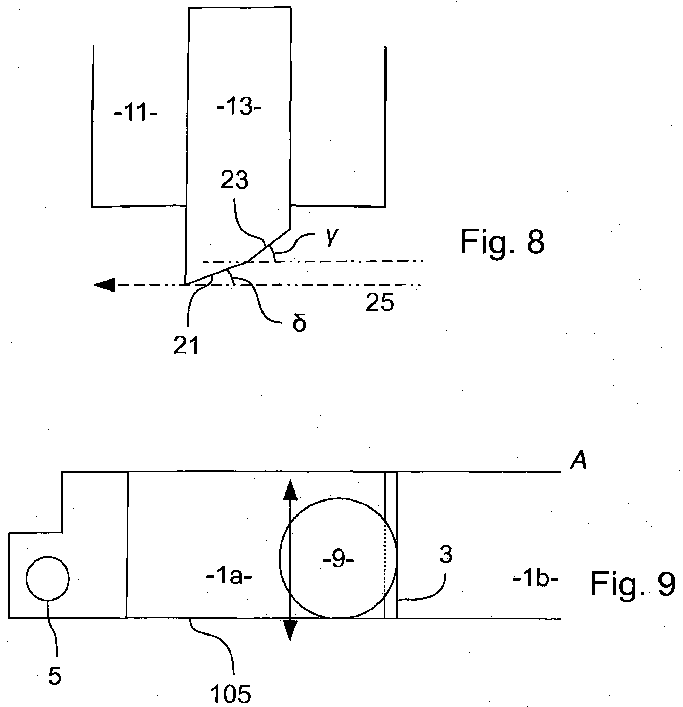

La figure 8 est une vue en coupe verticale de l'outil 9, au niveau de l'aplat de planage 15. On peut notamment voir en figure 8 le profil de la dent 13, présentant une dépouille 21 et une contre-dépouille 23. Bien qu'en figure 8 la coupe soit effectuée au niveau de l'aplat de planage 15, le décrochage 17 et le chanfrein avant présentent une structure similaire.

L'aplat de planage 15 présente une dépouille 21 formant avec la direction de coupe 25 de l'outil 9 un angle γ d'environ 5° à 8°, et une contre-dépouille 23 formant avec la direction d'avancée 25 de l'outil 9 un angle δ d'environ 10° à 14°. Avantageusement, la dépouille est de 6° plus ou moins 10' sur une longueur de 0,1 à 0,4mm, préférentiellement environ 0,25 millimètres.

Le décrochage 17 présente une dépouille 21 formant avec la direction d'avancée 25 de l'outil 9 un angle γ d'environ 10° à 14°, préférentiellement 12° plus ou moins 30'.

Le chanfrein avant 19 présente une dépouille 21 formant avec la direction d'avancée 25 de l'outil 9 un angle γ d'environ 6° à 10°, préférentiellement de 8° plus ou moins 10', et une une contre-dépouille 23 formant avec la direction d'avancée 25 de l'outil 9 un angle δ d'environ 10° à 14°, préférentiellement 12° plus ou moins 30'.

L'outil 9 est ici appliqué avec une vitesse de rotation de 8000 à 20000 tours par minute, et une avance de 300 à 600 millimètres par minute.

La figure 9 montre plus en détail l'étape 205 dans laquelle l'outil de fraisage 9 est utilisé pour usiner le chanfrein séparateur 3.

L'outil 9 est appliqué à la surface 1a, en particulier dans le sens longitudinal le long du chanfrein séparateur 3. La correspondance entre les angles du chanfrein séparateur 3 de la séparatrice 105 et du chanfrein avant 19 de la dent 13 permet l'obtention du chanfrein séparateur 3 en un seul passage longitudinal.

Lors des étapes suivantes 207 et 209, l'ébauche de séparatrice 105 est retournée et bridée (étape 207) sur un emplacement 307 de support 300, en particulier sur une table 301 dont le plateau est incliné selon un angle potentiellement différent correspondant à l'inclinaison des surfaces 1c, 1d de l'autre côté de la séparatrice 105. Ensuite (étape 209), l'outil de fraisage 9 est utilisé pour fraiser les surfaces 1c, 1d initialement situées sur la face opposée et inaccessible de la séparatrice 105.

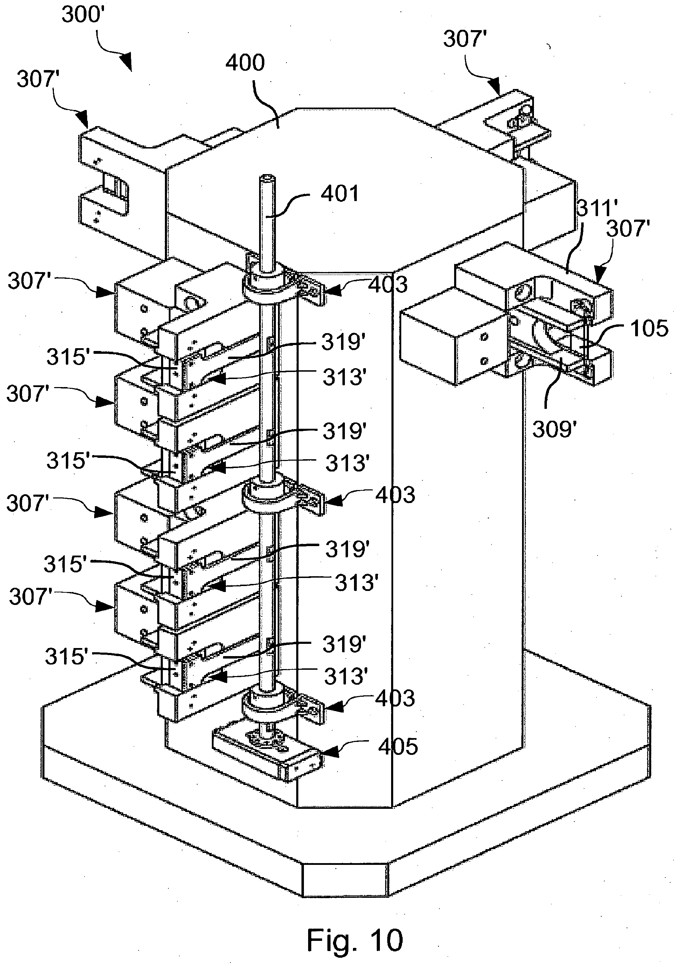

De manière alternative, le support 300 peut être remplacé par un support 300' tel que représenté sur la figure 10. Le support 300' comprend une tour 400 sur laquelle sont montés des emplacements de travail 307'. Plusieurs emplacements 307' peuvent être alignés verticalement sur une face de la tour 400 et les emplacements 307' peuvent être disposés sur plusieurs faces de la tour 400. Les séparatrices 105 sont disposées verticalement et bridées dans les emplacements 307' pour leur usinage. La fixation et le bridage des séparatrices 105 dans les emplacements 307' est réalisé comme dans le mode de réalisation précédent par le biais d'un mors fixe 311' et d'un mors mobile 309'. Des doigts, perçages et détrompeurs sont également utilisés. La tour 400 comprend également un ou plusieurs axes rotatifs 401 verticaux fixés sur 1a tour via des paliers 403. L'axe rotatif 401 est par exemple actionné par un vérin rotatif 405. Les dispositifs anti-vibrations 313' comprenant un tampon élastomère 315' et un élément élastique 319' sous forme d'une lame-ressort sont fixés sur l'axe rotatif 401 par exemple par le biais de vis de manière à ce que les tampons élastomères 315' viennent en contact avec les pièces métalliques ou séparatrices 105 par la rotation de l'axe rotatif 401. De plus, le vérin rotatif 405 est configuré pour appliquer une force de sorte à enfoncer le tampon élastomère 315' de 0,5mm à 3mm contre la pièce métallique ou séparatrice 105. Sur la figure 10, 1a tour 400 comprend 4 faces mais un nombre de faces différent peut être envisagé. Par ailleurs, le nombre d'emplacements 307' par face peut également varié et être supérieur à quatre. Par ailleurs, un seul axe rotatif est représenté sur la figure 10 mais plusieurs axes rotatifs 401 peuvent être disposés sur les différentes faces (quatre dans le cas présent).

Ainsi, en fonctionnement, l'ébauche est pré-fraisée comme précédemment puis placée et bridée dans un emplacement 307' de la tour 400 par le mors mobile 309' et le mors fixe 311'. la pièce métallique ou séparatrice 105 est alors orientée verticalement ce qui permet une meilleure évacuation des copeaux lors du fraisage. Une fois la pièce métallique 105 bridée, l'axe rotatif 401 est positionné dans une position rétractée dans laquelle le tampon élastomère 315' est éloigné de la pièce métallique 105. Les surfaces 1a et 1b orientées vers le mors fixe 311' sont alors fraisées comme décrit précédemment, l'outil de fraisage étant identique à l'outil décrit précédemment. Une fois les surfaces 1a et 1b fraisées, le vérin rotatif 405 actionne l'axe rotatif 401 de sorte que le tampon élastomère 315' vient en contact avec la pièce métallique 105 et notamment les surfaces 1a et 1b. La force appliquée par le vérin rotatif 405 entraîne un enfoncement de 0,5 à 3mm du tampon élastomère 315'. Les surfaces 1c et 1d orientées vers le mors mobile sont fraisées.

Ainsi, l'utilisation d'une tour 400 telle que représentée sur la figure 10 permet du fait des tampons élastomères 315' amovibles de pouvoir usiner les deux côtés de la séparatrice 105 sans avoir à la débrider. Le nombre de manipulations pour réaliser le fraisage de la séparatrice 105 est donc réduit ce qui permet de réduire le temps nécessaire au fraisage. De plus, l'orientation verticale des séparatrices 105 sur la tour permet une meilleure évacuation des copeaux issus du fraisage.

Le procédé de fraisage 200 est ici employé dans le cas particulier d'un processus d'usinage d'une séparatrice 105 de dispositif d'éclairage 100 de véhicule automobile 100, mais peut aussi être appliqué à l'obtention d'une surface de haute réflectivité (supérieure à 85 % en particulier) sur d'autres types de pièces métalliques en aluminium à usiner, en particulier avec une portion mince, et terminée par une arête fine *A*.

## Revendications

1. Dispositif anti-vibrations pour support de pièce métallique à fraiser, comprenant :
- un tampon élastomère (315) destiné à être en contact avec la pièce métallique,
- des éléments élastiques (319) sur lesquels est disposé le tampon élastomère (315).

2. Dispositif selon la revendication 1 dans lequel les éléments élastiques (319) sont destinés à être déformés lors du bridage de la pièce métallique (105).

3. Dispositif selon la revendication 1 ou 2, **caractérisé en ce que** le tampon élastomère (315) est d'une dureté comprise entre 70 et 90 Shore,

4. Dispositif selon l'une des revendications précédentes, **caractérisé en ce que** les éléments élastiques (319) comportent une lame ressort.

5. Dispositif selon l'une des revendications 1 à 3, **caractérisé en ce que** les éléments élastiques (319) comportent des ressorts hélicoïdaux.

6. Support (300, 300') de pièce métallique à fraiser, **caractérisé en ce qu'**il comporte :
- des moyens de bridage (309, 311) de la pièce métallique (105),
- un dispositif anti-vibrations (313) selon la revendication 1.

7. Support (300) selon la revendication 6 dans lequel les éléments élastiques (319) sont destinés à être déformés lors du calage de la pièce métallique (105).

8. Support (300) selon la revendication 7, **caractérisé en ce que** les moyens de bridage de la pièce métallique (105) sont disposés par rapport au dispositif anti-vibrations (313) de sorte que la pièce métallique (105) enfonce à l'état bridé le tampon élastomère (315) de 0,5mm à 3mm.

9. Support (300') selon la revendication 6 dans lequel les éléments élastiques (319') sont montés sur un axe rotatif (401) et forment un bras rotatif supportant le tampon élastomère (315') et configuré pour mettre en contact ledit tampon élastomère (315') avec la pièce métallique (105) lorsque cette dernière est positionnée dans les moyens de bridage (309', 311').

10. Support (300') selon la revendication 6 dans lequel l'axe rotatif (401) est actionné par un vérin rotatif (405) configuré pour appliquer une force de sorte à enfoncer le tampon élastomère (315') de 0,5mm à 3mm contre la pièce métallique (105) durant le fraisage de la pièce métallique (105).

11. Support (300') selon la revendication 9 ou 10 dans lequel l'axe rotatif (401) est orienté verticalement.

12. Procédé de fraisage (200) d'une pièce métallique en aluminium pour l'obtention d'un état de surface de réflectivité importante, **caractérisé en ce qu'**il comporte les étapes :
- la pièce métallique est bridée sur un dispositif anti-vibrations (313) comportant un tampon élastomère (315), et des éléments élastiques (319) portant ledit tampon élastomère (315),
- un outil de fraisage (9) est passé sur une surface (1a, 1b, 1c, 1d) de la pièce métallique, (105) ledit outil de fraisage (9) comportant une dent de fraisage (13) unique, entraînée en rotation à une vitesse de rotation comprise entre 8000 et 20000 tours par minute, l'outil (9) présentant une vitesse d'avance de 300 à 600 millimètres par minute, et ladite dent (13) présentant :
- un angle d'hélice nul,
- un angle de coupe nul,
- un plat de planage (15) d'une longueur comprise entre 1,3 et 1,5 millimètres, ayant une dépouille comprise entre 5° et 8°, et situé à une distance à l'axe de rotation (B) de 4 à 8 millimètres.

13. Procédé selon la revendication 7, **caractérisé en ce qu'**il comporte en outre une étape supplémentaire de fraisage préalable (201), effectuée avant l'étape (205) dans laquelle l'outil de fraisage (9) est passé sur la surface (1a, 1b, 1c, 1d), étape (201) supplémentaire dans laquelle un fraisage préliminaire de la surface est effectué, de sorte à laisser une surépaisseur de 1 à 5 microns.

14. Procédé selon la revendication 7 ou 8, **caractérisé en ce que** lors de l'étape (203) dans laquelle la pièce métallique (105) est bridée sur le tampon élastomère (315) ledit tampon élastomère (315) est enfoncé d'environ 0,5 à 3mm.

15. Procédé selon l'une des revendications 7 à 9, **caractérisé en ce que** lors de l'étape (203) dans laquelle ladite pièce métallique est calée sur le tampon élastomère (315), la pièce métallique (105) est disposée de sorte que l'arête (*A*) forme un surplomb de 0,05 et 0,2 millimètres.

## Patentansprüche

1. Schwingungsdämpfende Vorrichtung für zu fräsenden Metallteilträger, die Folgendes umfasst:
- einen Elastomerdämpfer (315), der dazu bestimmt ist, mit dem Metallteil in Berührung zu sein,
- elastische Elemente (319), auf welchen der Elastomerdämpfer (315) angeordnet ist.

2. Vorrichtung nach Anspruch 1, wobei die elastischen Elemente (319) dazu bestimmt sind, beim Verflanschen des Metallteils (105) verformt zu werden.

3. Vorrichtung nach Anspruch 1 oder 2, **dadurch gekennzeichnet, dass** der Elastomerdämpfer (315) eine Härte zwischen 70 und 90 Shore hat.

4. Vorrichtung nach einem der vorhergehenden Ansprüche, **dadurch gekennzeichnet, dass** die elastischen Elemente (319) eine Federklinge umfassen.

5. Vorrichtung nach einem der Ansprüche 1 bis 3, **dadurch gekennzeichnet, dass** die elastischen Elemente (319) Schraubenfedern umfassen.

6. Träger (300, 300') eines zu fräsenden Metallteils, **dadurch gekennzeichnet, dass** er Folgendes umfasst:
- Verflanschungsmittel (309, 311) des Metallteils (105),
- eine schwingungsdämpfende Vorrichtung (313) nach Anspruch 1.

7. Träger (300) nach Anspruch 6, wobei die elastischen Elemente (319) dazu bestimmt sind, beim Verkeilen des Metallteils (105) verformt zu werden.

8. Träger (300) nach Anspruch 7, **dadurch gekennzeichnet, dass** die Verflanschungsmittel des Metallteils (105) in Bezug auf die schwingungsdämpfende Vorrichtung (313) derart angeordnet sind, dass das Metallteil (105) im verflanschten Zustand den Elastomerdämpfer (315) 0,5 mm bis 3 mm eindrückt.

9. Träger (300') nach Anspruch 6, wobei die elastischen Elemente (319') auf eine Drehachse (401) montiert sind und einen Dreharm bilden, der den Elastomerdämpfer (315') trägt und konfiguriert ist, um den Elastomerdämpfer (315') mit dem Metallteil (105) in Berührung zu bringen, wenn Letzteres in den Verflanschungsmitteln (309', 311') positioniert ist.

10. Träger (300') nach Anspruch 6, wobei die Drehachse (401) durch einen Drehzylinder (405) betätigt wird, der ausgelegt ist, um eine Kraft derart anzulegen, dass der Elastomerdämpfer (315') um 0,5 mm bis 3 mm gegen das Metallteil (105) während des Fräsens des Metallteils (105) eingedrückt wird.

11. Träger (300') nach Anspruch 9 oder 10, wobei die Rotationsachse (401) vertikal ausgerichtet ist.

12. Fräsverfahren (200) eines Metallteils aus Aluminium zum Erhalten eines Oberflächenzustands mit hohem Reflexionsgrad, **dadurch gekennzeichnet, dass** es die folgenden Schritte aufweist:
- das Metallteil wird auf einer schwingungsdämpfenden Vorrichtung (313), die einen Elastomerdämpfer (315) und elastische Elemente (319), die den Elastomerdämpfer (315) tragen, umfasst, verflanscht,
- das Fräswerkzeug (9) wird über eine Oberfläche (1a, 1b, 1c, 1d) des Metallteils (105) geführt, wobei das Fräswerkzeug (9) einen einzigen Fräszahn (13) umfasst, der in Drehung mit einer Drehzahl zwischen 8000 und 20 000 Umdrehungen pro Minute angetrieben wird, wobei das Werkzeug (9) eine Vorlaufgeschwindigkeit von 300 bis 600 Millimeter pro Minute aufweist und der Zahn (13) Folgendes aufweist:
- einen Schraubenwinkel gleich null,
- einen Schneidwinkel gleich null,
- eine Schlichtebene (15) mit einer Länge zwischen 1,3 und 1,5 Millimeter, die einen Freistich zwischen 5° und 8° hat und sich in einer Entfernung von 4 bis 8 Millimeter von der Rotationsachse (B) befindet.

13. Verfahren nach Anspruch 7, **dadurch gekennzeichnet, dass** es außerdem einen zusätzlichen Schritt des vorausgehenden Fräsens (201) umfasst, der vor dem Schritt (205) ausgeführt wird, bei dem das Fräswerkzeug (9) über die Oberfläche (1a, 1b, 1c, 1d) geführt wird, wobei bei dem zusätzlichen Schritt (201) ein vorausgehendes Fräsen der Oberfläche derart ausgeführt wird, dass eine Überdicke von 1 bis 5 Mikrometer belassen wird.

14. Verfahren nach Anspruch 7 oder 8, **dadurch gekennzeichnet, dass** bei dem Schritt (203), bei dem das Metallteil (105) auf dem Elastomerdämpfer (315) verflanscht wird, der Elastomerdämpfer (315) um etwa 0,5 bis 3 mm eingedrückt wird.

15. Verfahren nach einem der Ansprüche 7 bis 9, **dadurch gekennzeichnet, dass** der Schritt (203), bei dem das Metallteil auf dem Elastomerdämpfer (315) verkeilt wird, das Metallteil (105) derart angeordnet wird, dass die Kante (A) einen Überhang von 0,05 und 0,2 Millimeter bildet.

## Claims

1. Antivibration device for supporting a metal part to be milled, comprising:
- an elastomer pad (315) intended to be in contact with the metal part,
- elastic elements (319) on which the elastomer pad (315) is disposed.

2. Device according to Claim 1 wherein the elastic elements (319) are intended to be deformed when clamping the metal part (105).

3. Device according to Claim 1 or 2, **characterized in that** the elastomer pad (315) has a Shore hardness between 70 and 90.

4. Device according to any one of the preceding claims, **characterized in that** the elastic elements (319) include a leaf spring.

5. Device according to any one of Claims 1 to 3, **characterized in that** the elastic elements (319) include coil springs.

6. Support (300, 300') for a metal part to be milled, **characterized in that** it includes:
- means (309, 311) for clamping the metal part (105),
- an antivibration device (313) according to Claim 1.

7. Support (300) according to Claim 6, wherein the elastic elements (319) are intended to be deformed when locking the metal part (105).

8. Support (300) according to Claim 7, **characterized in that** the means for clamping the metal part (105) are disposed relative to the antivibration device (313) so that in the clamped state the metal part (105) depresses the elastomer pad (315) of 0.5 mm to 3 mm.

9. Support (300') according to Claim 6 wherein the elastic elements (319') are mounted on a rotary shaft (401) and form a rotary arm supporting the elastomer pad (315') and configured to bring said elastomer pad (315') into contact with the metal part (105) when the latter is positioned in the clamping means (309', 311').

10. Support (300') according to Claim 6, wherein the rotary shaft (401) is actuated by a rotary actuator (405) configured to apply a force so as to depress the elastomer pad (315') of 0.5 mm to 3 mm against the metal part (105) during the milling of the metal part (105).

11. Support (300') according to Claim 9 or 10 wherein the rotary shaft (401) is oriented vertically.

12. A method (200) of milling a metal part made of aluminium to obtain a surface state of high reflectivity, **characterized in that** it includes the following steps:
- the metal part is clamped to an antivibration device (313) including an elastomer pad (315) and elastic elements (319) carrying said elastomer pad (315),
- a milling tool (9) is passed over a surface (1a, 1b, 1c, 1d) of the metal part (105), said milling tool (9) including a single milling tooth (13), driven in rotation at a rotation speed between 8,000 and 20,000 revolutions per minute, the tool (9) having a speed of advance of 300 to 600 millimetres per minute, and said tooth (13) having:
- a zero helix angle,
- a zero cutting angle,
- a levelling flat (15) with a length between 1.3 and 1.5 millimetres having a relief between 5° and 8° and situated at a distance from the rotation axis (B) of 4 to 8 millimetres.

13. Method according to Claim 7, **characterized in that** it further includes a supplementary step preliminary milling (201) effected before the step (205) in which the milling tool (9) is passed over the surface (1a, 1b, 1c, 1d), supplementary step (201) in which preliminary milling of the surface is effected such as to leave an overthickness of 1 to 5 microns.

14. Method according to Claim 7 or 8, **characterized in that** during the step (203) in which the metal part (105) is clamped to the elastomer pad (315) said elastomer pad (315) is depressed approximately of 0.5 to 3 mm.

15. Method according to any one of Claims 7 to 9, **characterized in that** during the step (203) in which said metal part is locked to the elastomer pad (315) the metal part (105) is disposed so that the edge (A) forms an overhang between 0.05 and 0.2 millimetres.
